(19) Europäisches Patentamt
European Patent Office
Office européen des brevets

(11) Publication number: **0 259 189 A2**

(12) # EUROPEAN PATENT APPLICATION

(21) Application number: **87307856.2**

(22) Date of filing: **04.09.87**

(51) Int. Cl.[4]: **C 08 G 75/02**
C 08 L 81/02

(30) Priority: **05.09.86 JP 208899/86**

(43) Date of publication of application:
**09.03.88 Bulletin 88/10**

(84) Designated Contracting States:
**AT BE CH DE ES FR GB GR IT LI LU NL SE**

(71) Applicant: **KUREHA KAGAKU KOGYO KABUSHIKI KAISHA**
**9-11 Horidome-cho 1-chome Nihonbashi Chuo-ku**
**Tokyo 103 (JP)**

(72) Inventor: **Ichikawa, Yukio**
**1-2 Ochiai Nishiki-machi**
**Iwaki-shi§Fukushima-ken (JP)**

**Katto, Takayuki**
**1-1-5 Nakaoka-machi**
**Iwaki-shi Fukushima-ken (JP)**

**Shiiki, Zenya**
**28-1 Ochiai Nishiki-machi**
**Iwaki-shi Fukushima-ken (JP)**

(74) Representative: **Woods, Geoffrey Corlett et al**
**J.A. KEMP & CO. 14 South Square Gray's Inn**
**London WC1R 5EU (GB)**

(54) **Fine spherulitic polyarylene thioether and a process for producing the same.**

(57) A polyarylene thioether comprising a repeating unit of

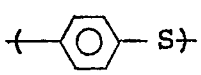

as the main constituent and having an average size of spherulites of not more than 2 μm formed upon crystallization of a molten polymer at 250°C is useful for preparing molded products.

EP 0 259 189 A2

**Description**

FINE SPHERULITIC POLYARYLENE THIOETHER AND A PROCESS FOR PRODUCING THE SAME

The present invention concerns a fine spherulitic uncured polyarylene thioether (hereinafter, polyarylene thioether will be referred to as PATE) and a process for manufacturing the same.

PATE has been developed as a heat resistant, chemical resistasnt and flame resistant thermoplastic resin. Particularly, since PATE crystallizes easily, it has advantageous features in that it has excellent melt processability such as for injection molding and in that the resultant molded products have excellent physical properties such as dimensional stability, strength, hardness and insulating performance. Taking these advantages, PATE has been employed in the industrial fields of electric, electronics, automobiles, aircrafts, precision instruments and chemicals.

However, PATE involves a problem of usually forming coarse spherulites of about 10 to 20 μm in size and, as a result, when fabricated into moldings from a molten state by cooling, toughness and impact strength of the moldings are somewhat insufficient.

The present inventors have made an extensive study for decreasing the size of spherulites formed upon crystallization of a molten polymer at a temperature lower than the melting point (hereinafter referred to as "molten spherulites") and, as a result, have found that a novel PATE that forming extremely fine molten spherulites can be obtained by treating PATE of an adequate molecular weight or of an adequate inherent solution viscosity $\eta_{inh}$ in a solution of a non-oxidative strong acid or of a strong-acid-weak-base type salt. The present invention has been accomplished based upon such a finding.

The object of the present invention is to provide a molding having sufficient toughness and impact strength in the case of producing PATE moldings through a melt processing.

A further object of this invention is to provide a fine spherulitic PATE with the average size of not more than 2 μm formed upon crystallization of a molten polymer at 250°C.

A further object of this invention is to provide a process for producing the fine spherulitic PATE.

The fine spherulitic PATE according to the present invention comprises a repeating unit of

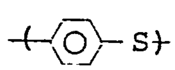

as the main constituent and has the average size of spherulites of not more than 2 μm formed upon crystallization of a molten polymer at 250°C.

Further, the present invention also relates to a process for producing such PATE.

Specifically, the process for producing a fine spherulitic PATE according to the present invention comprises bringing an alkali metal sulfide and a halo aromatic compound comprising a p-dihalo benzene as the main ingredient into a dehalogenating-sulfurizing reaction in an aprotic organic polar solvent thereby forming a PATE composed of a repeating unit of

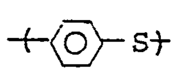

as the main constituent and having an inherent solution viscosity (measured at 206°C with 1-chloronaphthalene solution of PATE at 0.4 g/dl in concentration) of not less than 0.30 and not more than 0.90 dl/g. The resultant polymer is separated from the reaction solution and treated in a solution of a pH value of not more than 2, containing a non-oxidative strong acid of an ionization constant K not less than $10^{-3}$ measured in am aqueous solution at 25°C, under the condition not to cause curing, at a temperature of 0 to 150°C and for a time of 5 to 500 minutes, thereby obtaining a PATE having spherulites with an average size of not more than 2μm formed upon crystallization of a molten polymer at 250°C.

Another method of producing a fine spherulitic PATE according to the present invention comprises bringing an alkali metal sulfide and a halo aromatic compound comprising a p-dihalo benzene as the main ingredient into a dehalogenating-sulfurizing reaction in an aprotic organic polar solvent thereby forming a PATE composed of a repeating unit of

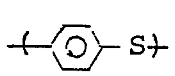

as the main constituent and having an inherent solution viscosity (measured at 206°C with 1-chloronaphthalene solution of PATE at 0.4 g/dl in concentration) of not less than 0.30 and not more than 0.90 dl/g. The resultant polymer is separated from the reaction solution and treated in a solution containing 0.1 to 30% by weight of a salt prepared with a non-oxidative strong acid with an ionization constant K of not less than $10^{-3}$ and a weak base with an ionization constant K of not more than $10^{-4}$, both measured in an aqueous solution at 25°C, under the condition not causing curing and at a temperatsure of 0 to 150°C and for a time of 5 to 500 minutes, thereby obtaining a PATE having spherulites with an average size of not more than 2 μm formed upon

crystallization of a molten polymer at 250°C.

It has been known as the general properties of crystalline polymers that those have smaller particle size of the molten spherulites give tougher moldings. That is, it is possible to obtain melt processing molding products with improved toughness and impact resistance using the PATE capable of forming fine molten spherulites according to the present invention. Among melt processing molding products, particularly, extrusion molding products (sheets, films, plates, pipes and profiles) having improved toughness and impact strength can be obtained. Further, since fine molten spherulites are formed, the PATE according to the present invention can be used as a seed for crystallization when added to other crystalline polymers.

Since the size of spherulites of conventional PATEs has been about 10 to 20 µm (as detailed later), it can be said that spherulites obtained by the present invention is extraordinarily fine and it is surprising that such size-reduction of spherulites can be obtained with usual PATE under the condition of heating in an acidic surrounding.

The present invention provides a PATE with the average particle size of molten spherulites of not more than 2 µm formed at 250°C from a molten state.

## Fine Spherulitic PATE

### Original PATE

Generally, PATE means a polymer comprising a repeating unit of -(- Ar-S -)- (Ar: arylene group) as the constituent, the PATE according to the present invention comprises p-phenylene group as arylene group as the main constituent. The expression "as the main constituent" in the present invention means that the repeating unit of

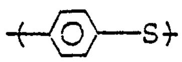

is contained not less than 60 mol% and, preferably, not less than 75 mol% of the total repeating unit of -(- Ar-S -)-.

Those constituting p-phenylene group as arylene group are preferred for the formation of fine spherulites. They are also preferred in view of physical properties such as heat resistance, moldability and mechanical properties.

Arylene groups other than p-phenylene group as the main constituent usable herein can include, for example, m-phenylene group

( 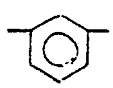 )

o-phenylene group

( 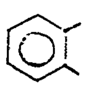 )

alkyl-substituted phenylene group

( 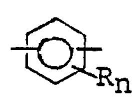 )

in which R represents alkyl group (preferably lower alkyl group) and n is an integer of 1 to 4, p,p'-diphenylenesulfone group

( 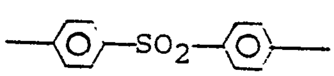 )

, p,p'-biphenylene group

( 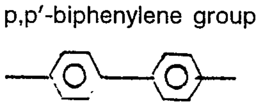 )

p,p'-diphenylene ether group

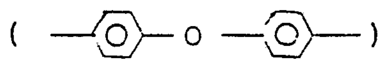

p,p′-diphenylene carbonyl group

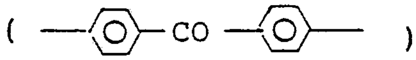

and naphthalene group

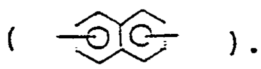

From the viewpoint of processability, those copolymers containing different types of repeating units are generally better than those homopolymers containing only the repeating unit of

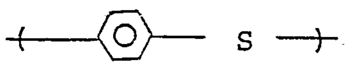

As the copolymer, those comprising

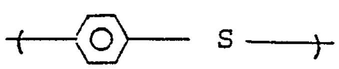

and

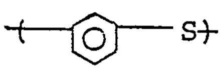

are preferred and, particularly, those containing the respective repeating units in the block form are more preferable to those containing such units in the random form (refer to EP-A 166,451), because use of the block copolymer is excellent over use of the random copolymer in physical properties (heat resistance, mechanical properties, etc.), although they are substantially equal with respect to processability. 5 to 40 mol% of the repeating unit of

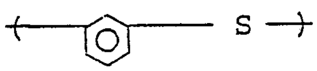

in the block copolymer (i.e., 95 to 60 mol% of the repeating unit of

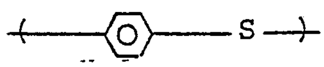

is preferable and, particularly, 10 to 25 mol% is more preferable.

As the PATE according to the present invention, those of substantially linear structure are preferred in respect to property of spherulites and physical properties. However, crosslinked product obtained by using a small amount of a crosslinking agent (for example. 1,2,4-trihalobenzene) upon polymerization, within a range not impairing the spherulites property and physical property, may also be used. Uncured PATE is preferred as the original polymer for the present invention. Judging from the fact that (a) cured PATE is difficult to form fine molten spherulites of not more than 2μm in size and (b) as it contains many branched and cross-linked structures, its molded product has insufficient mechanical strength, is discolored severely and is unstable upon melt processing, cured PATE is not preferable in respect to physical properties and processability.

As the original PATE of the present invention, those having melting point higher than 250°C are preferred. If the melting point is lower than 250°C, the major feature as a heat resistant polymer is impaired.

In the case of producing a fine spherulitic PATE by processing such PATE, the molecular weight of the original PATE is an important factor (will be explained later in detail.)

The PATE preferable for the present invention as described above can be produced generally by bringing an alkali metal sulfide (for example, sodium sulfide) and a halo aromatic compound containing p-dihalo benzene as the main ingredient into a dehalogenating-sulfurizing reaction in an aprotic organic polar solvent (for example, N-methyl pyrrolidone). Practically, it can be produced with an economical advantage, for example, by

the method described in U.S. Patent No. 4,645,826 filed by the present inventors. In addition, a method described in U.S. Patent No. 3,919,177 in which a polymerization aid such as a carboxylic acid salt is added in a large amount to obtain a high molecular weight PATE can also be used. However, the latter method is disadvantageous from an economical point of view.

Spherulite Property

The PATE with fine spherulites according to the present invention has a feature in that the average size of spherulites formed upon crystallization of a molten polymer at 250°C is as fine as not more than 2 μm in a particle size.

The spherulites include those spherulites formed from a crystalline polymer in a molten state upon crystallization thereof at a temperature lower than the melting point, that is, "molten spherulites" and spherulites formed by rapidly cooling a crystalline polymer in a molten state once into an amorphous solid and heating the solid again to a temperature higher than the secondary transition point, which should be called, so to speak, "solid spherulites".

The spherulites formed in a molded product in usual melt processing method, such as extrusion molding, injection molding and compression molding are of the "molten spherulites" type. The subject in the present invention is PATE with the spherulites of this type.

As the general property of crystalline polymers, the toughness and the impact resistance of their molded products are greater as the size of spherulites formed in the molded products is smaller. The size of the molten spherulites formed with a conventional PATE is coarse and, accordingly , the molded products lack in toughness and impact strength. Since the size of the molten spherulites formed with an identical polymer varies to some extent depending on the cooling condition, the size of the spherulites formed when the polymer is heated to melt at 340°C for one minute and soon after maintained at 250°C is assumed as the standard. Then, the average size of the molten spherulites formed with conventional PATEs has been coarser, being about 10 to 20 μm. While on the other hand, the average size of the molten spherulites of the PATE according to the present invention is not more than 2 μm and, particularly preferable, when it is not more than 1 μm. Accordingly, as has been described above, an extraordinarily fine molten spherulites can be formed with the PATE according to the present invention and it is possible to obtain molded products with remarkably improved toughness and impact strength.

Production of PATE with Fine Spherulites

Production of PATE with fine spherulites according to the present invention can include, for example, the following process, namely, a process of selecting a PATE having an adequate molecular weight among the PATEs with the structure appropriate to the present invention and processing it in a solution of a non-oxidative strong acid or of a strong-acid-weak-base type salt, although the method is not limited thereto.

Molecular Weight of Original PATE

Since the molecular weight of a PATE gives a significant effect on its size of molten spherulites this is an extremely important factor.

A preferred range for the molecular weight of PATE with fine spherulites according to the present invention, when expressed by an inherent solution viscosity $\eta_{inh}$(measured at 206°C with a l-chloronaphthalene solution of PATE at 0.4 g/dl in concentration), is within a range not less than 0.30 and not more than 0.90 dl/g and, more preferably, in a range of 0.35 to 0.7 dl/g. If the $\eta_{inh}$ is less than 0.30 dl/g, it is difficult to form fine spherulites with the average size of not more than 2μm. While on the other hand, if the $\eta_{inh}$ exceeds 0.90 dl/g, it is difficult to produce such PATE and, even if it is possible to produce, is difficult for the melt processing. Accordingly, they are not favorable from the production, fabrication and economical point of view.

Treatment with Acidic Solution

The effective method to obtain PATE with molten spherulites of not more than 2 μm in particle size is a process of the present invention, comprising (1) forming a PATE having the properties as described above through a polymerization reaction in a solvent, (2) separating the PATE formed from the reaction mixture and (3) treating in a solution of a non-oxidative strong acid or of a non-oxidative strong-acid-weak-base type salt. Namely, a polyarylene thioether (PATE) is formed through a dehalogenating-sulfurizing reaction between an alkali metal sulfide and a dihalo aromatic compound in an aprotic organic polar solvent and the solid polymer separated from the polymerization reaction mixture is treated as above. The solid polymer may be a wet or dried solid polymer separated from the liquid mixture by means of filtration, sieving, etc. of it may be a wet or solid polymer obtained after washing with methanol, water, etc. When the particle size is large, the polymer is preferably pulverized in a mill or the like before the treatment.

A treatment in a solution of a strong acid or in a solution of a strong-acid-weak-base type salt is sapplied to such polymer. Polymer content in the solution of the treating agent is preferably 2 to 70% by weight.

(a) Treatment with Strong Acid.

The polymer is added to a strong acid solution and treated under the condition of pH value of not more than 2 and, preferably, not more than 1.5. If the pH value of the treating solution is higher than 2, reaction of terminal residues is undesirably insufficient. The temperature is 0 to 150°C, preferably, 20 to 100°C and, more

preferably, 20 to 80°C. Temperature lower than 0.°C is not preferable since penetration of the strong acid solution to the core part of solid polymer (usually granular or powdery) is difficult. While on the other hand, temperature higher than 150°C is not preferable because the polymer may probably be cured. The treating time is 5 to 500 minutes, preferably, 10 to 300 minutes. The reaction is insufficient if the time for treatment is shorter than 5 minutes, whereas no substantial increase of the efficiency can be obtained if it exceeds 500 minutes and is uneconomical.

As the acid for the strong acid solution, a non-oxidative acid with the ionization constant K of not less than $10^{-3}$, measured in an aqueous solution at 25°C, is preferred. An oxidizing acid is not desirable because it may probably cause curing. Strong acid such as hydrochloric acid, diluted sulfuric acid, phosphoric acid, formic acid and halogenated acetic acid is preferred.

As a solvent for the strong acid solution, water or a mixture of water and alcohol, ketone or ether, mainly composed of water, is used. It is preferable that alcohol, ketone or ether has a sufficient miscibility with water and a sufficient solubility of acid to form an aqueous solution as a solvent. The solubility of these organic solvents to water, solubility of water to these organic solvents and the solubility of the strong acids thereto are well-known in handbooks or like. Particularly, from the standpoint of its chemical stability and economical advantage, it is preferable to use hydrochloric acid, diluted sulfuric acid or phosphoric acid as the acid, and water, an aqueous solution of alcohol (particularly, lower alcohol) or an aqueous solution of ketone (particularly, di-lower alkyl ketone) as the solvent.

After treating with the strong acid solution, it is preferable, for obtaining thermally and chemically stable polymer, to wash out sufficiently the strong acid solution remaining in the solid polymer, or to neutralize the remaining acid with a weak base such as ammonia and then wash with water. Particularly, the latter method of neutralizing with a weak base is preferred because a polymer of excellent in color can be obtained easily. The use of weak bease, not strong base, is preferable, because if the neutralization is conducted with a strong base, the size of molten spherulites may become similar size as that before the treatment with the strong acid solution.

(b) Treatment with Strong-Acid-Base Type Salt.

As the strong acid in the strong-acid-weak-base type salt, the non-oxidative strong acid exemplified above, for example, hydrochloric acid, diluted sulfuric acid, maleic acid, formic acid, halogenated acetic acid, etc. is preferable and, as the weak bases, those having ionization constant K, measured in an aqueous solution at 25°C. of not more than $10^{-4}$ are preferred. Particularly, ammonia, pyridine, etc. are used preferably. Among possible combinations, $NH_4Cl$, $(NH_4)_2SO_4$ and $(NH_4)_3PO_4$ are preferable due to their excellent effect.

As the solvent for these salts, those mentioned above for the strong acid solution may be used. Water and/or alcohol (particularly, lower alcohol) is particularly preferable in view of its high solubility of the salt.

The concentration of the salt in the solution for the treatment is within a range 0.1 to 30% by weight, preferably, 0.2 to 20% by weight. The effect is insufficient if the concentration is less than 0.1% by weight, whereas no substantial increase of effect can be obtained when it exceeds 30% by weight and so is uneconomical.

The temperature for the treatment is within a range of 0 to 150°C, preferably, 20 to 100°C and, particularly preferable, 20 to 80°C. The time for the treatment is, preferably, 5 to 500 minutes and 10 to 300 minutes is particularly preferable. The reason for defining the temperature and the time for the treatment within the above ranges is same as described above for the strong acid treatment.

After treating with the salt solution, the treated polymer can be cleaned by simple water washing and be stable sufficiently. In the case of strong acid treatment (a) above, a treatment device made of expensive special corrosion resistant material (nickel, nickel alloy, etc.) has to be used since ordinary corrosion resistant material (stainless steels, etc.) is easily corroded. However, in the case of salt treatment (b), a treatment device made of usual corrosion resistant material (stainless steels, etc.) can be used and, accordingly, the method (b) is overwhelmingly advantageous and preferable in view of the production procedures and the economical point.

Composition

The PATE with fine spherulites according to the present invention can be applied as it is to each of the melt processing methods, but it can be used as a composition with one or more materials selected from (i) fibrous fillers such as glass fibers, carbonaceous fibers, silica fibers, alumina fibers, silicon carbide fibers, zirconia fibers, calcium titanate fibers, wollastonite, calcium sulfate fibers and aramide fibers, (ii) inorganic powdery fillers such as talc, mica, clay, kaolin, calcium carbonate, magnesium carbonate, calcium silicate, magnesium silicate, silica, alumina, titanium white, carbon black, calcium sulfate, iron oxide, zinc oxide and copper oxide, (iii) synthetic resins such as polyolefin, polyester, polyamide, polyimide, polyether imide, polycarbonate, polyphenylene ether, polysulfone, polyether sulfone, polyether ether ketone, polyether ketone, polyarylene, polyacetal, polyvinylidene fluoride, polyethylene tetrafluoride, polystyrene, ABS resin, epoxy resin, urethane resin, silicone resin and phenol resin, or (iv) elastomers such as polyolefin rubber, fluorine rubber, silicone rubber, hydrogenated SBR, butyl rubber, polyester rubber and polyamide rubber. However, to take advantage of the feature of the PATE with fine spherulites of the present invention, it is preferred that the PATE is contained in the composition at least not less than 20% by weight, more preferable, not less than 30% by weight and, particularly preferable, not less than 50% by weight.

Since the PATE with fine spherulites according to the present invention or the composition therefrom forms fine spherulites upon melt processing and provides tough molded products, it can be applied to various kinds of melt processing such as extrusion molding, inflation molding, injection molding, compression molding and blow molding. Among all, tough molded products such as oriented or not-oriented films, oriented or not-oriented sheets, plates, pipes, rods and profiles can be obtained by extrusion molding or inflation molding. Furthermore, the PATE according to the present invention can also be used as a sort of seed for crystallization by adding not less than 5 wt % to conventional PATEs with coarse molten spherulites and to make their crystals sizes smaller.

Experimental Example

Synthetic Experimental Example 1

425 kg of hydrous sodium sulfide (solid content, 45.97%) and 931 kg of N-methyl pyrrolidone (NMP) were charged in a titanium-lined autoclave and the temperature was increased to about 203°C to distill out 168 kg of water. 2 kg of water and 29 kg of NMP were supplemented additionally (total water/ NMP = 3.5 mol/kg). Then, 356.5 kg of p-dichlorobenzene was charged (total arylene group/ NMP = 2.53 mol/kg) to the autoclave.

After reacting at 220°C for 5 hours, 69 kg of water was added (total water/NMP = 7.5 mol/kg). Then, the contents were polymerized at 265°C for 0.7 hour and at 245°C for 4 hours.

The reaction mixture was sieved with a screen of 0.1 mm mesh to separate only the granular polymer, which was washed with acetone and then with water to obtain a washed polymer.

A portion of the washed polymer was dried under a reduced pressure at 80°C to obtain a polymer 1A.

Second portion of the washed polymer was immersed in an aqueous 2% solution of $NH_4Cl$ and treated at 40°C for 30 minutes, washed with water and dried under a reduced pressure at 80°C to obtain a polymer 1B.

Another portion of the washed polymer was immersed in an aqueous hydrochloric acid solution of pH = 1 and treated at 40°C for 30 minutes, neutralized with a diluted aqueous ammonia, washed with water and then dried at 80°C under a reduced pressure to obtain a polymer 1C.

Synthetic Experimental Example 2

424 kg of hydrous sodium sulfide (solid content, 46.07%) and 929 kg of NMP were charged in a titanium-lined autoclave and the temperature was increased to about 203°C to distill out 170 kg of water. 6 kg of water and 41 kg of NMP were supplemented additionally (total water/NMP= 3.5 mol/kg). Then 361.5 kg of p-dichlorobenzene was charged (total arylene group/NMP = 2.54 mol/kg) in the autoclave.

After reacting at 220°C for 5 hours, 70 kg of water was supplied additionally (total water/NMP = 7.5 mol/kg). Then, the contents were polymerized at 255°C for 5 hours.

The reaction mixture was sieved with a screen of 0.1 mm mesh to separate only the granular polymer, which was washed with acetone and then with water to obtain a washed polymer.

A portion of the washed polymer was dried under a reduced pressure at 80°C to obtain a polymer 2A.

Another portion of the washed polymer was immersed in an aqueous 2% solution of $NH_4Cl$ and treated at 40°C for 30 minutes, washed with water and dried under a reduced pressure at 80°C to obtain a polymer 2B.

Synthetic Experimental Example 3

424 kg of hydrous sodium sulfide (solid content, 46.07%) and 931.5 kg of NMP were charged in a titanium-lined autoclave and the temperature was increased to about 203°C to distill out 169 kg of water. 3 kg of water and 41.5 kg of NMP were supplemented additionally (total water/NMP = 3.5 mol/kg). Then, 364 kg of p-dichlorobenzene was charged (total arylene group/NMP = 2.54 mol/kg) in the autoclave.

After reacting at 220°C for 5 hours, 136 kg of water was supplied additionally (total water/NMP = 11.3 mol/kg). Then the contents were polymerized at 260°C for 5 hours.

The reaction mixture was sieved with a screen of 0.1 mm mesh to separate only the granular polymer, which was washed with acetone and them with water to obtain a washed polymer.

A portion of the washed polymer was dried under a reduced pressure at 80°C to obtain a polymer 3A.

Another portion of the washed polymer was immersed in an aqueous hydrochloric acid solution of pH = 1 and treated at 40°C for 30 minutes, neutralized with a dilute aqueous ammonia, washed with water and then dried under a reduced pressure at 80°C to obtain a polymer 3C.

Synthetic Experimental Example 4

372.5 kg of hydrous sodium sulfide (solid content, 46.09% and 1035 kg of NMP were charged in a titanium-lined autoclave and the temperature was increased to about 203°C to distill out 145 kg of water. 3 kg of water and 35 kg of NMP were supplemented additionally(total water/NMP = 3.0 mol/kg). Then, 355 kg of p-dichlorobenzene was charged (total arylene group/NMP = 2.26 mol/kg) to the autoclave. After reacting at 210°C for 5 hours and at 220°C for 3 hours, 77 kg of water was supplied additionally (total water/NMP = 7.0 mol/kg). Then, the contents were polymerized at 258°C for 1.5 hours.

The reaction mixture was sieved with a screen of 0.1 mm mesh to separate only the granular polymer, which was washed with acetone and with water to obtain a washed polymer.

A portion of the washed polymer was dried under a reduced pressure at 80°C to obtain a polymer 4A.

Another portion of the washed polymer was immersed in an aqueous 2% solution of $NH_4Cl$ and treated at

40° C for 30 minutes, washed with water and dried under a reduced pressure at 80° C to obtain a polymer 4B.

Example 1.

The inherent solution viscosity $\eta_{inh}$ was determined for each of the polymers, synthesized in the above Examples, from the solution viscosity of l-chloronaphthalene solution of the polymer (0.4 g/dl in concentration) at 206° C. For the size of the spherulites, each sample of the polymers were melted by heating at 340° C for one minute, rapidly cooled to 250°C and the conditions of the growth of the spherulites were observed while maintaining the temperature at 250° C and the size of the resultant spherulites was measured, by using an optical microscope equipped with a heating stage.

"RYTON-P4®" (manufactured by Phillips Petroleum Co.), as an example of commercially available, conventional PATE, was analyzed as above for comparison.

The results are collectively shown in Table 1.

Table 1

| Polymer Code | η inh (dl/g) | Size of Spherulite (μm) | Remarks |
|---|---|---|---|
| 1A | 0.39 | 18 | Comparative Example |
| 1B | 0.39 | <1 | Example |
| 1C | 0.39 | <1 | Example |
| 2A | 0.33 | 20 | Comparative Example |
| 2B | 0.33 | 1 | Example |
| 3A | 0.28 | 30 | Comparative Example |
| 3C | 0.28 | 10 | Comparative Example |
| 4A | 0.13 | 250 | Comparative Example |
| 4B | 0.13 | 50 | Comparative Example |
| P4 | 0.28 | 15 | Comparative Example |

Example 2.

Pellets were prepared by uniformly blending 81 parts by weight of commercially available PATE, RYTON-P4, and 19 parts by weight of the polymer 1B, obtained in Synthetic Experimental Example 1, in a Henshel mixer, melt extruding the blend into a strand-like shape by a parallel twin-screw extruder and rapidly cooling and cutting the extrudate.

Average particle size of spherulites of the pellets was measured by the same method described in Example 1. The size of spherulites of the pellets was 10 μm and it can be seen that spherulites size is significantly reduced by adding PATE of the present invention as compared with the size of 15 μm for RYTON-P4 along (P4 in Table 1).

**Claims**

1. A polyarylene thioether comprising a repeating unit of

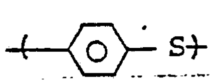

as the main constituent and having an average particle size of spherulites of not more than 2 μm formed upon crystallization at 250° C from the molten polymer.

2. A polyarylene thioether according to claim 1, which is a copolymer containing from 650 to 95 mol% of said repeating unit of

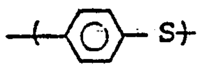

and from 40 to 50 mol% of the repeating unit of

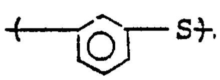

3. A polyarylene thioether according to claim 2, wherein said copolymer contains the respective repeating units

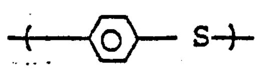

and

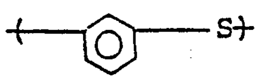

each in block form.

4. A process for producing a polyarylene thioether, which process comprises treating a polyarylene thioether comprising a repeating unit of

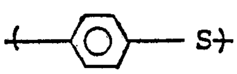

as the main constituent and having an inherent solution viscosity (measured with 1-chloronaphthalene solution of 0.4 g/dl of the polymer in concentration at 206° C) of not less than 0.30 and not more than 0.90 dl/g, under conditions which do not cause curing and at a temperature of 0 to 150° C and for a time of 5 to 500 minutes, with:

(i) a solution with a pH value of not more than 2 containing a non-oxidative strong acid with an ionization constant K, measured in an aqueous solution at 25° C, of not less than $10^{-3}$; or

(ii) a solution containing from 0.1 to 30% by weight of a salt composed of a non-oxidative strong acid with an ionization constant K of not less than $10^{-3}$ and a weak base with an ionization constant K of not more than $10^{-4}$, both measured in an aqueous solution at 25° C.

5. A process to claim 4, wherein the polyarylene thioether is prepared by bringing an alkali metal sulfide and a halo aromatic compound comprising a p-dihalo benzene as the main ingredient into a dehalogenating-sulfurizing reaction in an aprotic organic solvent.

6. A process according to claim 4 or 5, wherein said non-oxidative strong acid is at least one of the acids selected from hydrochloric acid, duluted sulfuric acid, phosphoric acid, formic acid and halogenated acetic acid.

7. A process according to any one of claims 4 to 6, wherein said weak base is at least one of the bases selected from ammonia and pyridine.

8. A polyarylene thioether composition containing not less than 20% by weight of a polyarylene thioether as claimed in any one of claims 1 to 3 or which has been produced by a process as claimed in any one of claims 4 to 7 and further comprising one or more component selected from fibrous fillers, inorganic powdery fillers, synthetic resins and elastomers.

9. A composition according to claim 8, wherein said fibrous filler comprises glass fibers, carbonaceous fibers, silica fibers, alumina fibers, silicon carbide fibers, zirconia fibers, calcium titanate fibers, wollastonite, calcium sulfate fibers or aramide fibers or a mixture of two or more thereof.

10. A composition according to claim 8 or 9, wherein said inorganic powdery filler comprises talc, mica, clay, kaolin, calcium carbonate, magnesium carbonate, calcium silicate, magnesium silicate, silica, alumina, titanium white, carbon black, calcium sulfate, iron oxide, zinc oxide or copper oxide or a mixture of two or more thereof.

11. A composition according to any one of claims 8 to 10, wherein said synthetic resin comprises a polyolefin, polyester, polyamide, polyimide, polyether imide, polycarbonate, polyphenylene ether, polysulfone, polyether sulfone, polyether ether ketone, polyether ketone, polyarylene, polyacetal, polyvinylidene fluoride, polyethylene tetrafluoride, polystyrene, ABS resin, epoxy resin, urethane resin, silicone resin or phenol resin or a mixture of two or more thereof.

12. A composition according to any one of claims 8 to 11, wherein said elastomer comprises a polyolefin rubber, fluorine rubber, silicone rubber, hydrogenated SBR, butyl rubber, polyester rubber or polyamide

rubber or a mixture of two or more thereof.

13. A process for producing a molded product, which process comprises melt processing a polyarylene thioether as claimed in any one of claims 1 to 3 or which has been produced by a process as claimed in any one of claims 4 to 7 or a polyarylene thioether composition as claimed in any one of claims 8 to 12.

14. A process for producing a molded product having spherulites with an average particle size smaller than that of the spherulites formed in commercially available polyarylene thioether, by applying melt processing to said commercially available polyarylene thioether, wherein not less than 5 wt% of a polyarylene thioether as claimed in any one of claims 1 to 3 or which has been produced by a process as claimed in any one of claims 4 to 7 is mixed with said commercial one before melting.